# FASCICULE DE BREVET EUROPEEN

(11) **EP 0 600 776 B1**
(45) Date de publication et mention de la délivrance du brevet: **21.01.1998**
(21) Numéro de dépôt: 93402879.6
(22) Date de dépôt: 29.11.1993
(51) Int. Cl.: F01K 23/10, F01K 7/32

(54) **Procédé de récupération de chaleur en particulier pour cycles combinés et appareillage pour la mise en oeuvre du procédé**
Verfahren zur Wärmerückgewinnung insbesondere für kombinierte Kreisläufe und Vorrichtung zur Durchführung des Verfahrens
Heat recovery process particularly for combined cycles and apparatus for carrying out the process

(30) Priorité: 02.12.1992 FR 9214511
(43) Date de publication de la demande: 08.06.1994
(73) Titulaire: STEIN INDUSTRIE, F-78140 Vélizy-Villacoublay (FR)
(72) Inventeur: Saujet, Jean-François, F-92600 Asnieres (FR); Amadieu, Pascale, F-78140 Velizy (FR); Hubert, Georges, F-75013 Paris (FR); Hrisafovic, Francine, F-92160 Antony (FR); Morin, Jean-Xavier, F-45170 Neuville aux Bois (FR)
(74) Mandataire: Pothet, Jean Rémy Emile Ludovic

(56) Documents cités:
- EP-A- 0 197 378
- WO-A-86/05234
- GB-A- 845 202
- GEC ALSTHOM TECHNICAL REVIEW no. 4 , Janvier 1991 , PARIS FR pages 15 - 26 J.PAREN 'COMBINED CYCLE PLANTS'

## Description

La présente invention se rapporte à un procédé de récupération de chaleur en particulier pour cycles combinés et l'appareillage pour la mise en oeuvre du procédé.

Elle concerne plus précisément un procédé de récupération de chaleur en particulier pour cycles combinés turbine à gaz/turbine à vapeur utilisant en sortie d'une turbine à gaz une chaudière de récupération où l'eau est d'abord traitée dans un dégazeur relié à un premier évaporateur.

Les cycles combinés associant turbine à gaz et turbine à vapeur constituent une technique connue de production d'électricité à partir de gaz naturel ou de produits pétroliers. Le cycle vapeur utilisé est en général du type sous-critique (à 110 bar) et comporte deux à trois niveaux de pressions (110 bar, 28 bar, 4,6 bar) permettant d'augmenter les rendements. L'augmentation récente des tailles de turbines à gaz et des températures de sortie des turbines à gaz permet également d'améliorer les cycles vapeur, par introduction d'une resurchauffe (à environ 540°C). Le rendement brut de cycle passe ainsi de 52,1 à 55,2%. Toutefois, la réduction des émissions de dioxyde de carbone et d'oxydes d'azote incite à poursuivre cette recherche d'amélioration du rendement de cycle qui est encore jugé insuffisant, notamment en fonctionnement en charges partielles.

Par ailleurs, il est connu d'utiliser des cycles vapeur supercritiques à une pression, avec des combustions de charbon pulvérisé pour la production d'électricité à fort rendement de 42 à 44%. Mais le développement de cette technique bute sur le problème de la corrosion à haute température des échangeurs terminaux par les composés soufrés et chlorés et sur la tenue mécanique des matériaux d'écrans. De plus l'adjonction de dispositifs de traitement de fumées pour réduire les émissions d'oxydes d'azote et de soufre apporte une complexité importante à l'exploitation et une augmentation importante du coût d'investissement.

La technique de combustion en lit fluidisé circulant peut actuellement se substituer à la technique de la combustion de charbon pulvérisé, dans une plage de puissance inférieure à 300 MW électriques car elle permet de réduire sensiblement in situ les émissions d'oxydes sans recourir à un traitement de fumées additionnel.

La présence d'échangeurs à lit fluidisé appelés également lits extérieurs dont le principe est décrit dans le brevet français FR-2 353 332 permet d'installer les échangeurs à haute température dans un milieu gaz/solides non corrosif avec des coefficients d'échange extrèmement élevés et se prête tout particulièrement à une configuration de cycle supercritique. Comme les cycles supercritiques concernent des unités de grande taille pour des raisons économiques de surcoût d'investissement, l'augmentation de taille des chaudières à lit fluidisé circulant se traduit par une contribution relative beaucoup plus importante de ces échangeurs à lit fluidisé dans les échanges de la boucle foyer et ces échangeurs constituent dès lors l'unique élément d'extrapolation ce qui est très favorable. Bien que très avantageuse du point de vue économique et du point de vue extrapolation, le rendement de cette technique de combustion en lit fluidisé circulant bute sur l'utilisation des turbines à vapeur dont les pressions et températures d'admission se situent actuellement à environ 275 bar et 565°C pour la vapeur vive, ce qui mène encore à des rendements de 42 à 44%. D'autre part, les rendements à charge partielle sont encore jugés insuffisants, puisque la chaudière fonctionne dans ce cas en conditions sous-critiques.

Il peut donc paraître avantageux de combiner une turbine à gaz et un lit fluidisé circulant par leurs cycles eau vapeur pour augmenter le rendement du cycle global. Mais cette combinaison, en utilisant des éléments connus tels qu'une chaudière derrière une turbine à gaz à trois pressions sous-critiques et une chaudière à lit fluidisé circulant à une pression supercritique constitue un problème complexe à résoudre et à optimiser. Il serait possible évidemment de transférer des échanges en assurant par exemple une surchauffe de la vapeur turbine à gaz moyenne pression dans le lit fluidisé circulant mais ceci ne constitue pas l'arrangement optimal du point de vue rendement.

Il serait également possible de faire fonctionner la récupération de chaleur derrière la turbine à gaz en mode supercritique à une pression mais ceci présente l'inconvénient d'offrir des rendements dégradés à charge partielle par le fait d'être en régime sous-critique à une pression.

Une difficulté supplémentaire peut provenir de la présence additionnelle d'une chaudière de récupération derrière un gazéifieur utilisé pour convertir en gaz un combustible solide pouvant être substitué au gaz naturel alimentant la turbine à gaz et permettant ainsi de n'utiliser que du combustible solide pour l'ensemble du cycle. Pour des raisons de corrosion par des composés soufrés et chlorés, la température du fluide réchauffé par cette chaudière doit être limitée pour maintenir la température des tubes d'échange en dessous d'une valeur seuil de déclenchement de corrosion rapide. Cette chaudière de récupération est actuellement du type sous-critique à une pression et cette limitation de température métal dégrade la valorisation de la chaleur sensible contenue dans le gaz issu du gazéifieur. Pour cette raison, les gazéifications en une étape de conversion carbone avec cendres fondues possèdent des limitations de rendement de cycle.

Les gazéifications avec conversion carbone en deux étapes paraissent plus intéressantes car il peut y avoir en lit fluidisé notamment une captation in situ du soufre par du calcaire pour former du sulfure de calcium, ce qui réduit la teneur en éléments soufrés corrosifs pour la chaudière de récupération derrière gazéifieur. Le résidu carboné issu de la gazéification peut être ensuite brûlé dans la chaudière à lit fluidisé circulant.

Dans le document GEC ALSTHOM TECHNICAL REVIEW, n°4, janvier 1991, pages 15 à 26, est décrite une installation de récupération de chaleur pour cycles combinés à trois niveaux de pression et comprenant un premier évaporateur relié à un dégazeur d'où partent trois alimentations aux trois circuits de pression.

La présente invention propose un procédé de récupération de chaleur permettant d'augmenter de façon importante le rendement global du cycle.

Pour ce faire, dans la chaudière en sortie de turbine à gaz est utilisé un cycle de vapeur ultrasupercritique à quatre niveaux de pression avec vaporisation intermédiaire des fluides sous-critiques, l'expression pression ultrasupercritique signifiant pression supérieure à 280 bar.

L'augmentation de rendement résulte à la fois de l'adoption de conditions ultrasupercritiques et du nombre de niveaux de pression qui permettent de rapprocher la courbe de refroidissement des fumées avec la courbe d'échauffement/vaporisation des divers fluides aux différentes pressions.

Cette proximité des températures de fluide à réchauffer avec le fluide chaud permet alors de valoriser de façon optimale l'énergie disponible par détente dans les corps de la turbine à vapeur pour aboutir à un rendement de cycle très supérieur à celui obtenu de façon classique.

Selon un mode de réalisation préféré, les quatre niveaux de pression P1, P2, P3, P4 sont compris dans les plages suivantes:
P1 comprise entre 4 et 10 bar
P2 comprise entre 20 et 40 bar
P3 comprise entre 70 et 120 bar
P4 supérieure à 280 bar.

Selon un mode de réalisation précis, ils sont de 6, 28, 96 et 320 bar.

Avantageusement, les appareils d'échanges thermique situés entre les étages de vaporisation sont imbriqués.

L'appareillage pour la mise en oeuvre de ce procédé comprend la séquence des appareils suivante:
- un premier évaporateur relié à un dégazeur d'où partent les quatre alimentations des circuits aux pressions P1, P2, P3, P4;
- au moins quatre échangeurs du type économiseur pour les quatre fluides à pressions P1 à P4;
- un évaporateur à la pression P1;
- au moins trois échangeurs du type économiseur pour les trois fluides aux pressions P2, P3 et P4;
- un évaporateur à pression P2;
- au moins un surchauffeur de vapeur à pression P1 relié à la sortie de la vapeur à la pression P1;
- au moins deux échangeurs du type économiseur pour les deux fluides à pressions P3 et P4;
- un évaporateur de vapeur à pression P3;
- au moins un surchauffeur de vapeur à pression P2 relié à la sortie de vapeur à la pression P2;
- au moins deux échangeurs pour les deux fluides à pressions P3 et P4 du type économiseur et surchauffeur, l'échangeur pour le fluide à la pression P3 étant relié à la sortie de vapeur à la pression P3;
- au moins un échangeur de vapeur à pression P4;
- au moins trois échangeurs dont un premier assure la resurchauffe du mélange des fluides à pressions P3, dont un deuxième assure la resurchauffe du mélange des fluides à pressions P2 et dont un troisième assure la surchauffe finale des vapeurs à pression P4 et est relié à la sortie de vapeur à la pression P4.

L'invention concerne également une application préférée dans une installation de récupération de chaleur pour un cycle combiné avec turbine à gaz et turbine à vapeur à corps haute pression, à corps première pression intermédiaire, à corps deuxième pression intermédiaire et à corps basse pression, dans laquelle le corps haute pression de la turbine à vapeur est alimenté d'une part par la vapeur à la pression ultrasupercritique P4 provenant de la chaudière de récupération et d'autre part par le fluide du dégazeur de ladite chaudière chauffé par des échangeurs d'une chaudière à lit fluidisé circulant.

Avantageusement, une chaudière de récupération en aval d'un gazéifieur est associée à la chaudière à lit fluidisé circulant, la vapeur d'alimentation du corps haute pression de la turbine à vapeur provenant du dégazeur étant également chauffée par cette chaudière.

Selon une autre caractéristique, le corps première pression intermédiaire de la turbine à vapeur est alimenté par la vapeur de sortie du corps haute pression de la turbine à vapeur resurchauffée en partie par des échangeurs d'une chaudière à lit fluidisé circulant et en partie par un resurchauffeur à la pression P3 de la chaudière de récupération, avec ajout à l'entrée de celui-ci de la vapeur à la pression P3 provenant de la chaudière de récupération.

Selon une autre caractéristique, le corps deuxième pression intermédiaire de la turbine à vapeur est alimenté par la vapeur de sortie du corps première pression intermédiaire de la turbine à vapeur resurchauffée en partie par des échangeurs d'une chaudière à lit fluidisé circulant et en partie par un resurchauffeur à la pression P2 de la chaudière de récupération, avec ajout à l'entrée de celui-ci de la vapeur à la pression P2 provenant de la chaudière de récupération.

L'invention est décrite ci-après plus en détail à l'aide de figures ne représentant qu'un mode préféré de réalisation de l'invention.

La figure 1 est une vue de l'appareillage d'une chaudière de récupération conforme à l'invention.

La figure 2 est une représentation de l'évolution des températures de l'appareillage d'une chaudière de récupération conforme à l'invention.

La figure 3 est une vue schématique d'une application préférée dudit appareillage pour former une installation pour cycles combinés.

La figure 4 est une vue schématique de l'ensemble de chaudière à lit fluidisé circulant comprise dans cette installation.

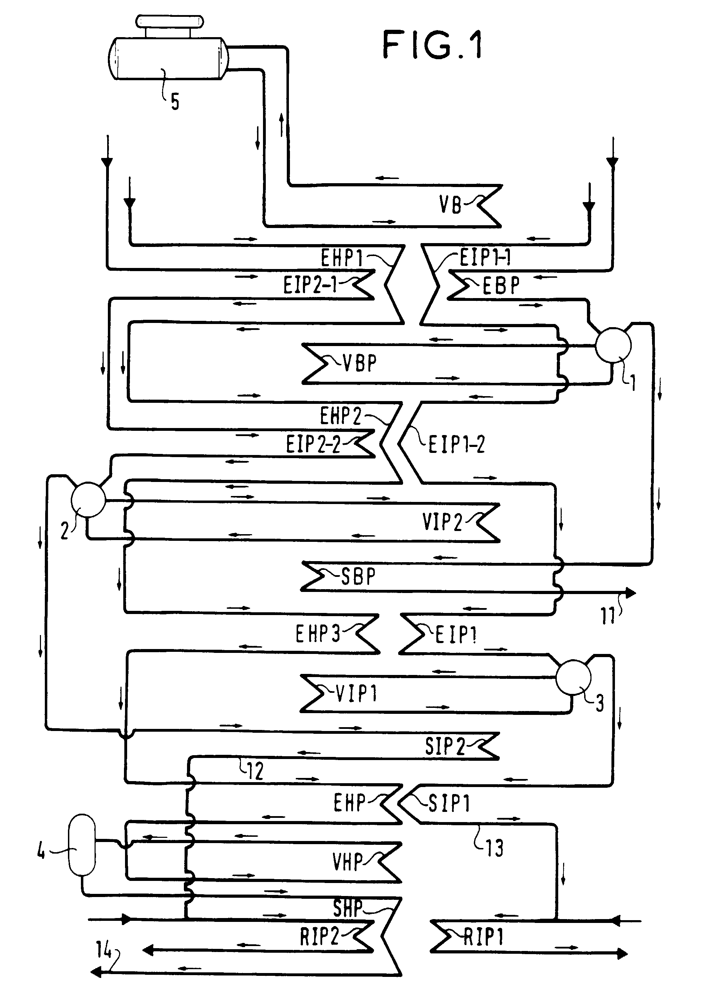

La figure 1 représente l'appareillage d'échange thermique d'une chaudière de récupération, en sortie d'une turbine à gaz, où l'eau est d'abord traitée dans un dégazeur 5 relié à un premier évaporateur et comprenant un certain nombre d'appareils d'échange thermique. Dans cette chaudière est ensuite utilisé un cycle de vapeur ultrasupercritique à quatre niveaux de pression P1, P2, P3, P4 avec étages de vaporisation intermédiaire des fluides sous-critiques.

Plus précisément, les quatre niveaux de pression P1, P2, P3, P4 sont compris dans les plages suivantes:
P1 comprise entre 4 et 10 bar
P2 comprise entre 20 et 40 bar
P3 comprise entre 70 et 120 bar
P4 supérieure à 280 bar et de préférence comprise entre 280 et 350 bar.

Selon un mode de réalisation précis, ils sont de 6, 28, 96 et 320 bar.

Par ailleurs, comme il est visible sur la figure 1, les appareils d'échanges thermique situés entre les étages de vaporisation sont imbriqués.

L'appareillage comprend la séquence des appareils suivante:
- un premier évaporateur VB relié à un dégazeur 5 d'où partent les quatre alimentations des circuits aux pressions P1, P2, P3, P4;
- au moins quatre échangeurs EHP1,EIP2-1,EIP1-1,EBP du type économiseur pour les quatre fluides de pressions P1 à P4;
- un évaporateur VBP à la pression P1 relié à un réservoir 1;
- au moins trois échangeurs EHP2,EIP2-2,EIPI-2 du type économiseur pour les trois fluides aux pressions P2, P3 et P4;
- un évaporateur VIP2 à pression P2 relié à un réservoir 2;
- au moins un surchauffeur SBP de vapeur à pression P1 relié à la sortie 11 de la vapeur à la pression P1;
- au moins deux échangeurs EIP1,EHP3 du type économiseur pour les deux fluides à pressions P3 et P4;
- un évaporateur VIP1 à pression P3 relié à un réservoir 3;
- au moins un surchauffeur SIP2 de vapeur à pression P2 relié à la sortie de vapeur 12 à la pression P2;
- au moins deux échangeurs EHP,SIP1 pour les deux fluides à pressions P3 et P4 du type économiseur et surchauffeur, l'échangeur SIP1 pour le fluide à la pression P3 étant relié à la sortie 13 de vapeur à la pression P3;
- au moins un échangeur VHP à pression P4 relié éventuellement à un organe de séparation 4;
- au moins trois échangeurs dont un premier RIP1 assure la resurchauffe du mélange des fluides à pressions P3, dont un deuxième RIP2 assure la resurchauffe du mélange des fluides à pressions P2 et dont un troisième SHP assure la surchauffe finale des vapeurs à pression P4 et est relié à la sortie 14 de vapeur à la pression P4.

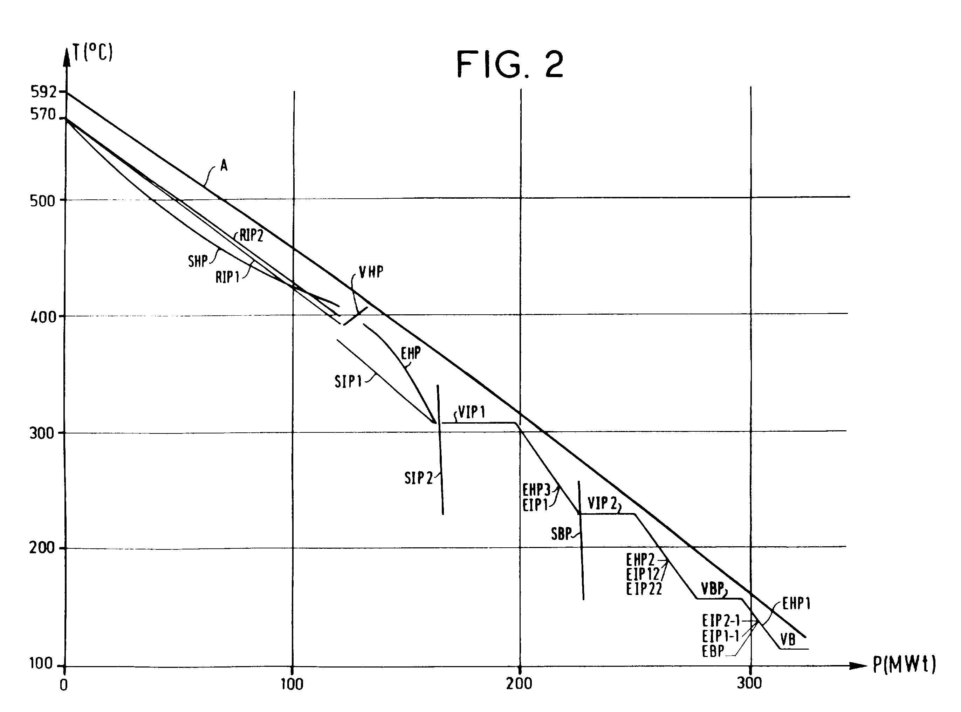

La figure 2 est une représentation du fonctionnement de l'appareillage décrit ci-dessus. En abscisses sont représentées les puissances échangées par les appareils et en ordonnées les températures des fluides parcourant ces appareils.

Ce graphe permet d'illustrer le résultat obtenu par l'agencement optimal de l'appareillage. La courbe de refroidissement des fumées qui est la courbe A est fortement approchée par la courbe d'échauffement et de vaporisation des fluides aux diverses pressions.

Le rendement est ainsi optimal et comparé à une configuration de cycle à trois pressions sous-critiques, le rendement d'une installation utilisant une turbine à gaz de 212 MégaWatt électriques passe de 55,2 à 57% environ grâce à l'invention, rendement dépendant d'une part du point de rosée acide des fumées qui gouverne le choix de la température à la cheminée, point de rosée lui-même fonction de la teneur en soufre du combustible, et d'autre part de la température de la source froide du cycle.

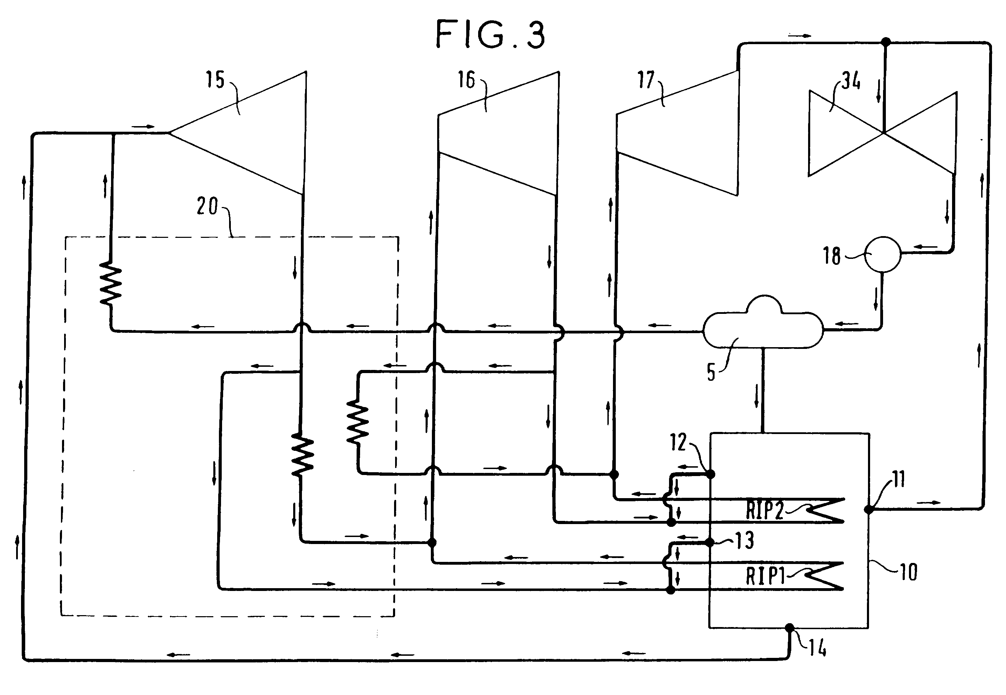

La figure 3 représente une application préférée de la chaudière de récupération décrite ci-dessus.

Cette chaudière installée en aval d'une turbine à gaz est schématisée en 10 où sont représentés la sortie 11 de vapeur à la pression P1, la sortie 12 de vapeur à la pression P2, la sortie 13 de vapeur à la pression P3, la sortie 14 de vapeur à la pression P4 et les resurchauffeurs RIP1 et RIP2.

La vapeur à la pression P4 ultrasupercritique est envoyée directement au corps haute pression 15 d'une turbine à vapeur. Le corps haute pression 15 reçoit également de la vapeur provenant du dégazeur 5 de la chaudière de récupération 10 chauffée dans une chaudière à lit fluidisé circulant 20 comme il sera vu plus loin.

En sortie du corps haute pression 15, la vapeur à resurchauffer est traitée partiellement dans la chaudière à lit fluidisé circulant 20. Une partie est directement envoyée dans le resurchauffeur RIP1 de la chaudière de récupération 10, après ajout de la vapeur à la pression P3 venant de la sortie 13 de la chaudière de récupération 10, pour venir en sortie du resurchauffeur RIP1 alimenter le corps première pression intermédiaire dit IP1 16 de la turbine à vapeur. Une autre partie est resurchauffée dans la chaudière à lit fluidisé circulant 20 pour venir également alimenter le corps IP1 16 de la turbine à vapeur.

Cet agencement autorise le fonctionnement découplé des deux générateurs de vapeur et donc autorise le fonctionnement avec seulement la turbine à gaz alimentée en gaz naturel ou le fonctionnement avec le lit fluidisé circulant seul alimenté avec un combustible de secours. Ceci augmente la disponibilité globale de l'installation.

En sortie du corps IP1 16 de la turbine à vapeur, la vapeur à resurchauffer est pour une partie envoyée au resurchauffeur RIP2 de la chaudière 10, après ajout de la vapeur à la pression P2 provenant de la sortie 12 de la chaudière de récupération 10, et pour une autre partie resurchauffée dans la chaudière à lit fluidisé circulant 20. Cette vapeur resurchauffée, en sortie du resurchauffeur RIP2 d'une part et de la chaudière à lit fluidisé circulant 20 d'autre part est envoyée au corps deuxième pression intermédiaire dit IP2 17 de la turbine à vapeur.

Ceci complète la possibilité de fonctionnement découplé des deux générateurs de vapeur évoquée ci-dessus.

En sortie de ce corps IP2 17, la vapeur est envoyée vers le corps basse pression dit BP 34 de la turbine à vapeur. La sortie 11 de vapeur à la pression P1 de la chaudière de récupération 10 est quant à elle connectée au corps BP 34 de la turbine à vapeur.

En sortie de ce corps BP 34, la vapeur est envoyée à un condenseur avec pompe d'extraction 18 pour réalimenter en fluide le dégazeur 5.

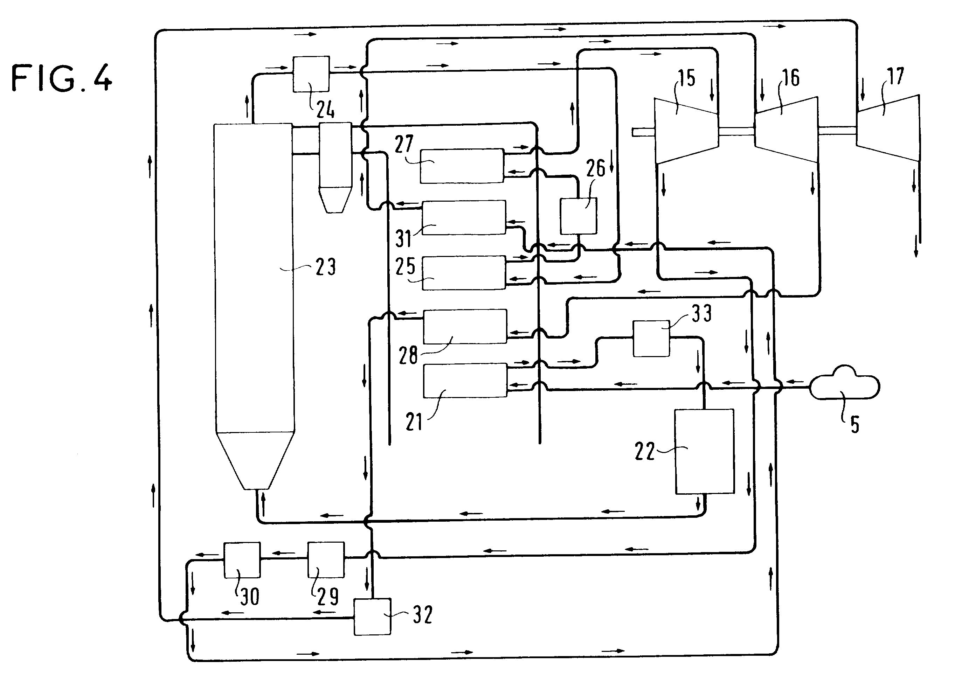

L'ensemble de récupération thermique de la chaudière à lit fluidisé circulant 20 va être maintenant décrit à l'aide de la figure 4.

Afin d'alimenter le corps haute pression 15 de la turbine à vapeur, le fluide provenant du dégazeur 5 est envoyé dans des économiseurs 21 et 33, puis dans une chaudière de récupération 22 d'un gazéifieur éventuellement associé, puis est chauffé par le foyer 23 de la chaudière à lit fluidisé. La vapeur en résultant est envoyée dans un échangeur 24 constituant la cage arrière et les suspensions de la cage arrière de la chaudière à lit fluidisé 20, dans un surchauffeur 25 basse température situé dans la chaudière à lit fluidisé 20, dans un surchauffeur moyenne température 26 situé dans un des lits extérieurs, puis dans un surchauffeur final haute température 27. La vapeur en résultant alimente le corps haute pression 15 de la turbine à vapeur, ajoutée à la vapeur à la pression P4 de la chaudière de récupération.

En sortie de ce corps haute pression 15, la vapeur à resurchauffer par la chaudière à lit fluidisé circulant 20 passe dans des resurchauffeurs basse et moyenne température 29 et 30 situés dans des lits extérieurs, puis dans un resurchauffeur haute température 31. La vapeur en résultant alimente le corps IP1 16 de la turbine à vapeur, ajoutée à la vapeur sortant du resurchauffeur RIP1 de la chaudière de récupération 10.

En sortie du corps IP1 16 de la turbine à vapeur, la vapeur à resurchauffer par la chaudière à lit fluidisé circulant 20 passe dans un resurchauffeur basse température 28, dans des resurchauffeurs hautes températures 32 situés dans des lits extérieurs. La vapeur en résultant alimente le corps IP2 17 de la turbine à vapeur, ajoutée à la vapeur sortant du resurchauffeur RIP2 de la chaudière de récupération 10.

La chaudière à lit fluidisé circulant 20 assure donc éventuellement la resurchauffe partielle des fluides mélangés ultérieurement avec les vapeurs à pression P2 et P3 provenant directement de la chaudière de récupération 10 avant introduction dans les corps 16, 17 de la turbine à vapeur.

Il y a donc compatibilité des niveaux de pression et cohérence des échanges entre les différents éléments de l'installation sur la base d'un cycle ultrasupercritique.

La description détaillée de la configuration des échangeurs dans la chaudière à lit fluidisé circulant n'est fournie qu'à titre indicatif et évidemment d'autres agencements ayant pour but de minimiser les surfaces d'échange installées dans la chaudière à lit fluidisé circulant sont possibles et s'intègrent dans le principe de l'invention.

## Revendications

1. Procédé de récupération de chaleur en particulier pour cycles combinés turbine à gaz/turbine à vapeur utilisant en sortie d'une turbine à gaz une chaudière de récupération où l'eau est d'abord traitée dans un dégazeur (5) relié à un premier évaporateur et comprenant un certain nombre d'appareils d'échange thermique caractérisé en ce que dans cette chaudière est utilisé un cycle de vapeur ultrasupercritique à quatre niveaux de pression (P1, P2, P3, P4) avec étages de vaporisation intermédiaire des fluides sous-critiques, l'expression pression ultrasupercritique signifiant pression supérieure à 280 bar.

2. Procédé selon la revendication 1, caractérisé en ce que les quatre niveaux de pression (P1, P2, P3, P4) sont compris dans les plages suivantes:
P1 comprise entre 4 et 10 bar
P2 comprise entre 20 et 40 bar
P3 comprise entre 70 et 120 bar
P4 supérieure à 280 bar.

3. Procédé selon la revendication 2, caractérisé en ce que les quatre niveaux de pression (P1, P2, P3, P4) sont de 6, 28, 96 et 320 bar.

4. Procédé selon l'une des revendications précédentes, caractérisé en ce que les appareils d'échange thermique situés entre les étages de vaporisation sont imbriqués.

5. Appareillage pour la mise en oeuvre du procédé selon l'une des revendications précédentes comprenant un premier évaporateur (VB) relié à un dégazeur (5) d'où partent des alimentations aux différents circuits, caractérisé en ce qu'il comprend la séquence des appareils suivante:
- le premier évaporateur (VB) d'où partent les quatre alimentations des circuits aux pressions P1, P2, P3, P4;
- au moins quatre échangeurs (EHP1,EIP2-1,EIP1-2,EBP) du type économiseur pour les quatre fluides de pressions P1 à P4;
- un évaporateur (VBP) à la pression P1;
- au moins trois échangeurs (EHP2,EIP2-2,EIP1-1) du type économiseur pour les trois fluides aux pressions P2, P3 et P4;
- un évaporateur (VIP2) à pression P2;
- au moins un surchauffeur (SBP) de vapeur à pression P1 relié à la sortie (11) de la vapeur à la pression P1;
- au moins deux échangeurs (EIP1,EHP3) du type économiseur pour les deux fluides à pressions P3 et P4;
- un évaporateur (VIP1) à pression P3;
- au moins un surchauffeur (SIP2) de vapeur à pression P2 relié à la sortie de vapeur 12 à la pression P2;
- au moins deux échangeurs (EHP,SIP1) pour les deux fluides à pressions P3 et P4 du type économiseur et surchauffeur, l'échangeur (SIP1) pour le fluide à la pression P3 étant relié à la sortie (13) de vapeur à la pression P3;
- au moins un échangeur (VHP) à pression P4;
- au moins trois échangeurs dont un premier (RIP1) assure la resurchauffe du mélange des fluides à pressions P3, dont un deuxième (RIP2) assure la resurchauffe du mélange des fluides à pressions P2 et dont un troisième (SHP) assure la surchauffe finale des vapeurs à pression P4 et est relié à la sortie (14) de vapeur à la pression P4.

6. Installation de récupération de chaleur pour un cycle combiné avec turbine à gaz et turbine à vapeur à corps haute pression (15), à corps première pression intermédiaire (16), à corps deuxième pression intermédiaire (17) et à corps basse pression (34), pour la mise en oeuvre du procédé selon l'une des revendications 1 à 4, installation caractérisée en ce que le corps haute pression (15) de la turbine à vapeur est alimenté d'une part par la vapeur à la pression ultrasupercritique P4 provenant de la chaudière de récupération (10) et d'autre part par le fluide du dégazeur (5) de ladite chaudière (10) chauffé par des échangeurs d'une chaudière à lit fluidisé circulant (20).

7. Installation selon la revendication 6, caractérisée en ce que le corps première pression intermédiaire (16) de la turbine à vapeur est alimenté par la vapeur de sortie du corps haute pression (15) de la turbine à vapeur resurchauffée en partie par des échangeurs d'une chaudière à lit fluidisé circulant (20) et en partie par un resurchauffeur à la pression P3 de la chaudière de récupération (10), avec ajout à l'entrée de celui-ci de la vapeur à la pression P3 provenant de la chaudière de récupération (10).

8. Installation selon la revendication 6, caractérisée en ce que le corps deuxième pression intermédiaire (17) de la turbine à vapeur est alimenté par la vapeur de sortie du corps première pression intermédiaire (16) de la turbine à vapeur resurchauffée en partie par des échangeurs d'une chaudière à lit fluidisé circulant (20) et en partie par un resurchauffeur à la pression P2 de la chaudière de récupération (10), avec ajout à l'entrée de celui-ci de la vapeur à la pression P2 provenant de la chaudière de récupération (10).

9. Installation selon la revendication 6, caractérisée en ce qu'une chaudière de récupération (22) en aval d'un gazéifieur est associée à la chaudière à lit fluidisé circulant (20), le fluide d'alimentation du corps haute pression (15) de la turbine à vapeur provenant du dégazeur (5) étant également chauffée par cette chaudière (22).

## Patentansprüche

1. Verfahren zur Wärmerückgewinnung insbesondere für kombinierte Gasturbinen/Dampfturbinen-Kreisläufe, die am Ausgang einer Gasturbine einen Abwärmekessel verwenden, wo das Wasser zunächst in einem Entgaser (5) behandelt wird, der mit einem ersten Verdampfer verbunden ist und eine bestimmte Zahl von Wärmeaustauscheinrichtungen umfaßt, dadurch gekennzeichnet, daß in diesem Kessel ein ultraüberkritischer Dampfkreislauf mit vier Druckpegeln (P1, P2, P3, P4) mit Stufen zur Zwischenverdampfung der unterkritischen Medien verwendet wird, wobei der Ausdruck ultraüberkritischer Druck einen Druck über 280 bar bedeutet.

2. Verfahren nach Anspruch 1, dadurch gekennzeichnet, daß die vier Druckpegel (P1, P2, P3, P4) in den folgenden Bereichen liegen:
P1 zwischen 4 und 10 bar
P2 zwischen 20 und 40 bar
P3 zwischen 70 und 120 bar
P4 über 280 bar.

3. Verfahren nach Anspruch 2, dadurch gekennzeichnet, daß die vier Druckpegel (P1, P2, P3, P4) 6, 28, 96 und 320 bar betragen.

4. Verfahren nach einem der vorhergehenden Ansprüche, dadurch gekennzeichnet, daß die zwischen den Verdampfungsstufen befindlichen Einrichtungen zum Wärmeaustausch ineinandergreifend angeordnet sind.

5. Vorrichtung zur Durchführung des Verfahrens nach einem der vorhergehenden Ansprüche, die einen ersten Verdampfer (VB) aufweist, der mit einem Entgaser (5) verbunden ist, von dem Speisungen zu den verschiedenen Kreisläufen ausgehen, dadurch gekennzeichnet, daß sie die nachstehende Folge von Einrichtungen umfaßt:
- den ersten Verdampfer VB, von dem die vier Speisungen der Kreisläufe mit den Drücken P1, P2, P3, P4 ausgehen;
- mindestens vier Austauscher (EHP1, EIP2-1, EIP1-1, EBP) von der Art eines Vorwärmers für die vier Medien mit den Drücken P1 bis P4;
- einen Verdampfer (VBP) mit dem Druck P1;
- mindestens drei Austauscher (EHP2, EIP2-2, EIP1-2) von der Art eines Vorwärmers für die drei Medien mit den Drücken P2, P3 und P4;
- einen Verdampfer (VIP2) mit dem Druck P2;
- mindestens einen Überhitzer (SBP) für Dampf mit dem Druck P1, der mit dem Auslaß (11) des Dampfes mit dem Druck P1 verbunden ist;
- mindestens zwei Austauscher (EIP1, EHP3) von der Art eines Vorwärmers für die zwei Medien mit den Drücken P3 und P4;
- einen Verdampfer (VIP1) mit dem Druck P3;
- mindestens einen Überhitzer (SIP2) für Dampf mit dem Druck P2, der mit dem Auslaß 12 des Dampfes mit dem Druck P2 verbunden ist;
- mindestens zwei Austauscher (EHP, SIP1) für die zwei Medien mit den Drücken P3 und P4 von der Art eines Vorwärmers und eines Überhitzers, wobei der Austauscher (SIP1) für das Medium mit dem Druck P3 mit dem Auslaß (13) des Dampfes mit dem Druck P3 verbunden ist;
- mindestens einen Austauscher (VHP) mit dem Druck P4;
- mindestens drei Austauscher, von denen ein erster (RIP1) die Zwischenüberhitzung des Gemisches der Medien mit den Drücken (P3) gewährleistet, von denen ein zweiter (RIP2) die Zwischenüberhitzung des Gemisches der Medien mit den Drücken P2 gewährleistet und von denen ein dritter (SHP) die abschließende Überhitzung der Dämpfe mit dem Druck P4 gewährleistet und mit dem Auslaß (14) des Dampfes mit dem Druck P4 verbunden ist.

6. Anlage zur Wärmerückgewinnung für einen kombinierten Kreislauf mit Gasturbine und Dampfturbine mit einem Hochdruckgehäuse (15), einem Gehäuse für einen ersten Mitteldruck (16), einem Gehäuse für einen zweiten Mitteldruck (17) und einem Niederdruckgehäuse (34), zur Durchführung des Verfahrens nach einem der Ansprüche 1 bis 4, Anlage, dadurch gekennzeichnet, daß das Hochdruckgehäuse (15) der Dampfturbine einerseits mit dem von dem Abwärmekessel (10) kommenden Dampf mit dem ultraüberkritischen Druck P4 und andererseits mit dem Medium des Entgasers (5) dieses Kessels (10) gespeist wird, das durch Austauscher eines Kessels mit zirkulierender Wirbelschicht (20) erhitzt wird.

7. Anlage nach Anspruch 6, dadurch gekennzeichnet, daß das Dampfturbinengehäuse für einen den ersten Mitteldruck (16) mit dem Austrittsdampf des Hochdruckgehäuses (15) der Dampfturbine gespeist wird, der zum Teil durch Austauscher eines Kessels mit zirkulierender Wirbelschicht (20) und zum Teil durch einen Zwischenüberhitzer mit dem Druck P3 des Abwärmekessels (10) zwischenüberhitzt wird, wobei am Eingang des Zwischenüberhitzers der von dem Abwärmekessel (10) kommende Dampf mit dem Druck P3 hinzugefügt wird.

8. Anlage nach Anspruch 6, dadurch gekennzeichnet, daß das Dampfturbinengehäuse für einen zweiten Mitteldruck (17) mit dem Austrittsdampf des Dampfturbinengehäuses für einen ersten Mitteldruck (16) gespeist wird, der zum Teil durch Austauscher eines Kessels mit zirkulierender Wirbelschicht (20) und zum Teil durch einen Zwischenüberhitzer mit dem Druck P2 des Abwärmekessels (10) zwischenüberhitzt wird, wobei am Eingang des Zwischenüberhitzers der von dem Abwärmekessel (10) kommende Dampf mit dem Druck P2 hinzugefügt wird.

9. Anlage nach Anspruch 6, dadurch gekennzeichnet, daß mit dem Kessel mit zirkulierender Wirbelschicht (20) ein stromabwärts von einem Gaserzeuger befindlicher Abwärmekessel (22) verbunden ist, wobei der von dem Entgaser (5) kommende Speisedampf des Hochdruckgehäuses (15) der Dampfturbine ebenfalls durch diesen Kessel (22) erhitzt wird.

## Claims

1. Heat recovery method suitable for combined gas turbine/steam turbine cycles including at the exhaust of a gas turbine a waste heat boiler in which water is first treated in a degassing unit (5) connected to a first evaporator and comprising a certain number of heat exchangers characterised in that said boiler uses an ultrasupercritical steam cycle with four pressure levels (P1, P2, P3, P4) with subcritical fluid intermediate evaporator stages, the expression ultrasupercritical pressure meaning a pressure greater than 280 bars.

2. Method according to claim 1 characterised in that the four pressure levels (P1, P2, P3, P4) are in the following ranges:
P1 between 4 and 10 bars,
P2 between 20 and 40 bars,
P3 between 70 and 120 bars,
P4 above 280 bars.

3. Method according to claim 2 characterised in that the four pressure levels (P1, P2, P3, P4) are 6, 28, 96 and 320 bars.

4. Method according to any one of the preceding claims characterised in that the heat exchangers between the evaporator stages are interleaved.

5. Plant for implementing the method according to any one of the preceding claims including a first evaporator (VB) connected to a degassing unit (5) feeding the various circuits, characterised in that it comprises the following sequence of units:
- the first evaporator (VB) feeding the circuits at pressures P1, P2, P3, P4;
- at least four economiser type exchangers (EHP1, EIP2-1, EIP1-1, EBP) for the four fluids at pressures P1 to P4;
- an evaporator (VBP) at pressure P1;
- at least three economiser type heat exchangers (EHP2, EIP2-2, EIP1-1) for the three fluids at pressures P2, P3 and P4;
- an evaporator (VIP2) at pressure P2;
- at least one superheater (SBP) for steam at pressure P1 connected to the outlet (11) for steam at pressure P1;
- at least two economiser type exchangers (EIP1, EHP3) for the two fluids at pressures P3 and P4;
- an evaporator (VIP1) at pressure P3;
- at least one superheater (SIP2) for steam at pressure P2 connected to the outlet (12) for steam at pressure P2;
- at least two economiser and superheater type exchangers (EHP, SIP1) for the two fluids at pressures P3 and P4, the exchanger (SIP1) for the fluid at pressure P3 being connected to the outlet (13) for steam at pressure P3;
- at least one exchanger (VHP) at pressure P4;
- at least three exchangers a first of which (RIP1) reheats the mixture of fluids at pressure P3, a second of which (RIP2) reheats the mixture of fluids at pressure P2 and a third of which (SHP) superheats the steam at pressure P4 and is connected to the outlet for steam at pressure P4.

6. Heat recovery installation for a combined gas turbine and steam turbine cycle in which the steam turbine has a high-pressure stage (15), a first intermediate pressure stage (16), a second intermediate pressure stage (17) and a low-pressure stage (34), to implement the method according to any one of claims 1 to 4, characterised in that the high-pressure stage (15) of the steam turbine is fed with the steam at the ultrasupercritical pressure P4 from the waste heat boiler (10) and with the fluid from the degassing unit (5) of said boiler (10) heated by exchangers of a circulating fluidised bed boiler (20).

7. Heat recovery installation according to claim 6 characterised in that the first intermediate pressure stage (16) of the steam turbine is fed with the steam from the exhaust of the high-pressure stage (15) of the steam turbine reheated in part by exchangers of a circulating fluidised bed boiler (20) and in part by a reheater at pressure P3 of the waste heat boiler (10), with steam at pressure P3 from the waste heat boiler (10) added at the inlet of the reheater.

8. Heat recovery installation according to claim 6 characterised in that the second intermediate pressure stage (17) of the steam turbine is fed with the steam from the exhaust of the first intermediate pressure stage (16) of the steam turbine reheated in part by exchangers of a circulating fluidised bed boiler (20) and in part by a reheater at pressure P2 of the waste heat boiler (10), with steam at pressure P2 from the waste heat boiler (10) added at the inlet of the reheater.

9. Installation according to claim 6 characterised in that a waste heat boiler (22) on the output side of a gasifier is associated with the circulating fluidised bed boiler (20), the fluid feeding the high-pressure stage (15) of the steam turbine from the degassing unit (5) being also heated by this boiler (22).
